# EUROPEAN PATENT APPLICATION

(11) **EP 1 760 948 A1**
(43) Date of publication of application: **07.03.2007**
(21) Application number: 06253149.6
(22) Date of filing: 19.06.2006
(51) Int. Cl.: H04L 12/28

(54) **Apparatus and method for wireless communication**

(30) Priority: 21.06.2005 JP 2005180745
(71) Applicant: KABUSHIKI KAISHA TOSHIBA, Tokyo 105-8001 (JP)
(72) Inventor: Utsunomiya, Yoriko, c/o Intellectual Property Div., Minato-ku Tokyo 105-8001 (JP); Adachi, Tomoko, c/o Intellectual Property Division, Minato-ku Tokyo 105-8001 (JP); Takeda, Daisuke, c/o Intellectual Property Div., Minato-ku Tokyo 105-8001 (JP); Sato, Kazumi, c/o Intellectual Property Division, Minato-ku Tokyo 105-8001 (JP); Tandai, Tomoya, c/o Intellectual Property Division, Minato-ku Tokyo 105-8001 (JP); Ogura, Koji, c/o Intellectual Property Division, Minato-ku Tokyo 105-8001 (JP)
(74) Representative: Maury, Richard Philip

(57) **Abstract**

There is disclosed a wireless communication apparatus using any of a plurality communication bands. A detection device (22, 10) detects a cyclic interference with a first communication band of the plurality of communication bands. An assignment device (40) assigns the first communication band to an extension channel and assigns a second communication band of the plurality of communication bands to a control channel, when the cyclic interference has been detected by the detection device (22, 10).

Accordingly, a communication device (10) performs wireless communication using the control channel and the extension channel.

## Description

The present invention relates to a wireless communication system in which a plurality of users share a plurality of channels.

Media access control (MAC) is control to decide on how a plurality of communication apparatuses, which communicate by sharing the same medium, should use the medium in transmitting communication data. Owing to media access control, even if two or more communication apparatuses transmit communication data by using the same medium at the same time, there is a lower possibility of a collision, in which a communication apparatus on the receiving side cannot separate communication data. Media access control also reduces the chance of a medium being left unused by any communication apparatuses, despite the presence of communication apparatuses having transmission requests.

In general, in wireless communication, since it is difficult for a communication apparatus to monitor transmission data while transmitting the data, media access control that does not rely on collision detection is used. IEEE 802.11, which is a typical technical standard for wireless local area networks (LANs), uses Carrier Sense Multiple Access with Collision Avoidance (CSMA/CA).

According to CSMA/CA in IEEE 802.11, in the header of a MAC frame, a period (called a duration) until the end of a sequence comprising one or more frame exchanges following the MAC frame is set. In the duration, a communication apparatus, which is irrelevant to the sequence and has no transmission right, waits for transmission upon determining a virtual reserved state of the medium. This prevents collision. On the other hand, a communication apparatus having a transmission right in this sequence recognizes that the medium is not used except for a period during which the medium is actually reserved.

IEEE 802.11 defines that the state of a medium is determined on the basis of a combination of virtual carrier sense on the MAC layer as in the former case and real carrier sense on the physical layer as in the latter case, and media access control is performed on the basis of the determination.

JP-A 2003-87856 (KOKAI) discloses a method of realizing wireless base stations which can be commonly used in a plurality of wireless LAN schemes in a wireless communication system in which a plurality of wireless LAN schemes with different physical layers are present. More specifically, a wireless base station is made to alternately generate the first notification signal on the first physical layer and the second notification signal on the second physical layer and transmit them to wireless terminals, and the first and second physical layers are switched in synchronism with the first and second notification signals. The wireless terminal corresponding to the first physical layer is allowed limited access for a predetermined period of time after the transmission time of the first notification signal, whereas the wireless terminal corresponding to the second physical layer is allowed limited access for a predetermined period of time after the transmission time of the second notification signal.

IEEE 802.11 using CSMA/CA has made attempts to increase the communication speed mainly by changing the protocol of the physical layer. With regard to the 2.4 GHz band, there have been changes from IEEE 802.11 (established in 1997, communication speed = 2 Mbps) to IEEE 802.11b (established in 1999, communication speed = 11 Mbps), and further to IEEE 802.11g (established in 2003, communication speed = 54 Mbps). With regard to the 5 GHZ band, IEEE 802. 11a (established in 1999, communication speed = 54 Mbps) exists as a standard specifications.

As an approach for speeding up communication speed, there is a method for increasing the frequency bandwidth of a channel. To realize high speed communication due to extension communication bandwidth by bundling several channels, communication apparatus need to find and acquire several vacant channels. However, when securing a plurality of channels, there is a high possibility that a communication apparatus compete with some communication apparatus belonging to other system in the same frequency band. For example, in a case where a wireless LAN terminal using a 5 GHz band secures two 20 MHz channels for performing a 40 MHz communication, a frequency band for the two channels must be secured while circumventing radars that use the same communication band. Consequently, a scheme is required not to interfere with communication apparatus belonging to other system and to share the same frequency band.

Regarding communication using a single channel, it is suggested in IEEE 802.11h to circumvent radars which exist within the same communication band. For instance, in IEEE 802.11h, when a radar is detected on a channel that is currently used by a terminal, the terminal searches other channels. If the terminal finds another vacant channel, the terminal stops using the channel on which the radar is detected and switches the communication channel to another channel. Regarding communication using a plurality of channels in a bundle, in IEEE 802.11h, none of terminal operations are regulated, even when a radar is detected on any of the plurality of channels.

In a broadband communication, which is realized by simultaneously using a plurality of channels in a bundle, channel search is carried out to secure the plurality of channels. However, the terminal operation is not envisioned in the case where a substantial interference (for example, of a radar) appears irregularly or regularly in any of the multiple channels searched thereby.

The present invention is directed to provide a wireless communication apparatus, method, and system for performing high speed wireless communication using a wide frequency band, which can coexist with even when an interference source such as a radar use the same communication band.

A wireless communication apparatus according to one aspect of the present invention includes a wireless communication apparatus using any of a plurality of communication bands, comprising: a detection device configured to detect a cyclic interference with a first communication band of the plurality of communication bands; an assignment device configured to assign the first communication band to an extension channel and assign a second communication band of the plurality of communication bands to a control channel, when the cyclic interference has been detected by the detection device; and a communication device configured to perform wireless communication using the control channel and the extension channel.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a wireless communication apparatus according to a first embodiment;
FIG. 2 is a diagram showing another wireless communication apparatus according to the first embodiment;
FIG. 3 is a view illustrating an example of network according to the first embodiment;
FIG. 4A is a channel allocation for 40 MHz communication;
FIG. 4B is a channel allocation for 20 MHz communication;
FIG. 5 is a diagram showing the flow of a signal according to the first embodiment;
FIG. 6 is a message sequence chart illustrating a terminal operation according to the first embodiment;
FIG. 7 is a diagram showing the flow of a signal according to the first embodiment;
FIG. 8 is a message sequence chart illustrating a terminal operation according to the first embodiment;
FIG. 9 is a diagram showing the flow of a signal according to the first embodiment;
FIG. 10 is a message sequence chart illustrating a terminal operation according to the first embodiment;
FIG. 11 is a diagram showing an operation of a terminal upon radar detection according to the first embodiment;
FIG. 12 is a diagram illustrating a radar avoidance operation according to the first embodiment;
FIG. 13 is a diagram illustrating another radar avoidance operation according to the first embodiment;
FIG. 14 is a diagram illustrating a transmission abort operation on ch.2 according to the first embodiment;
FIG. 15 is a diagram illustrating another radar avoidance operation according to the first embodiment; and
FIG. 16 is a diagram showing an operation of a terminal upon radar detection according to a second embodiment.

A wireless communication system for searching frequency channels prior to communications includes a wireless LAN system on the basis of IEEE Std. 802.11-1999 [revision 2003 includes ISO/IEC 8802-11, 1999(E) ANSI/IEEE Std 802.11, 1999 edition, IEEE Std 802.11a-1999, IEEE Std 802.11b-1999, IEEE Std 802.11b-1999/Cor. 1-2001 and IEEE Std 802.11d-2001]. Hereinafter, the IEEE 802.11 wireless LAN system according to embodiments will be explained. The IEEE 802.11 standard is a standard related to a physical (hereinafter, referred to as PHY) layer and a medium access control (MAC) layer. The following will be described by drawing attention mainly to the process in the MAC layer. Further, the IEEE 802.11 standard described herein includes standards positioned as amendments and recommended practices of IEEE 802.11 standard.

### (First Embodiment)

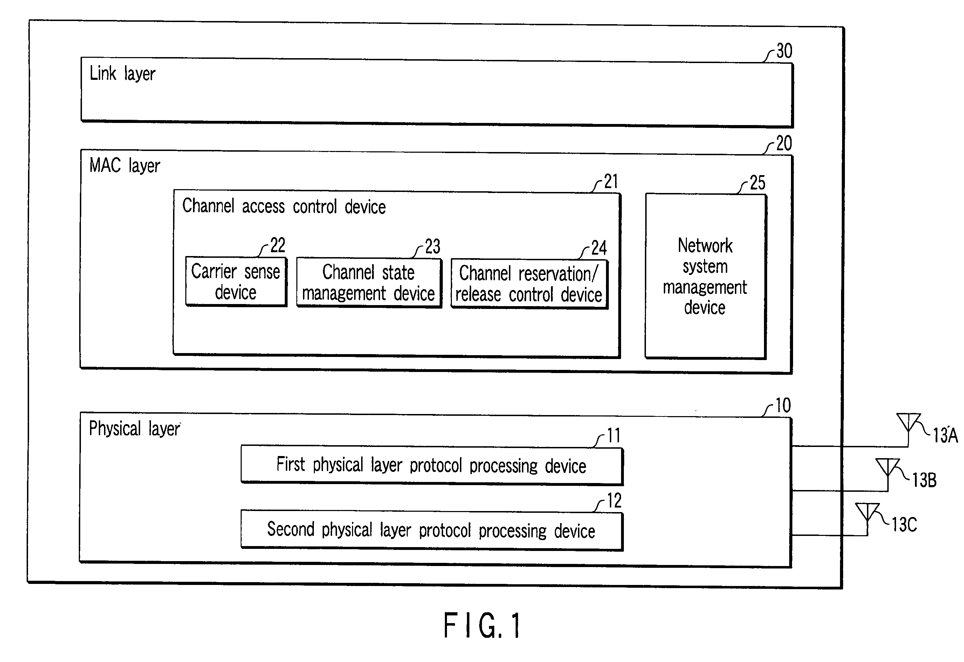

A wireless communication apparatus shown in FIG. 1 roughly includes a physical layer 10, MAC layer 20, and link layer 30. The physical layer 10 corresponds to two types of physical layer protocols using channels having different frequency bands. More specifically, the physical layer 10 includes a first physical layer protocol processing device 11 which performs physical layer protocol processing for communication by using a first channel having a first communication bandwidth, and a second physical layer protocol processing device 12 which performs physical layer protocol processing for communication by using a second channel having a second communication bandwidth which is wider than the first frequency band. The first physical layer protocol processing device 11 and second physical layer protocol processing device 12 often share circuits bilaterally and are not necessarily independent of each other in terms of implementation.

The protocols processed by the first physical layer protocol processing device 11 include, for example, at least a physical layer protocol defined by IEEE 802.11a. Assume that the first communication bandwidth used by the first physical layer protocol processing device 11 has a bandwidth of, e.g., 20 MHz. The first physical layer protocol processing device 11 may use a so-called multiple-input multiple-output (MIMO) technique using a plurality of antennas 13A to 13C on each of the transmitting side and the receiving side. As the MIMO technique makes it possible to expect an increase in transmission capacity almost proportional to the number of antennas without changing the frequency band, it is therefore highly probable that this technique may be adopted for IEEE 802.11 Task Group n (TGn), which strives to further increase the throughput of IEEE 802.11.

Assume that the second physical layer protocol processing device 12 uses, for example, one or both of single-input single-output (SISO) and MIMO techniques. Assume that the second communication bandwidth used by the second physical layer protocol processing device 12 has a bandwidth of, e.g., 40 MHz. The first communication bandwidth exists within the second communication bandwidth.

The MAC layer 20 includes a channel access control device 21. The channel access control device 21 includes a carrier sense device 22, channel state management device 23, and channel reservation/release control device 24. The MAC layer 20 further includes a network system management device 25, which governs the generation of beacon frames, management of association and so forth and is extended as needed.

The carrier sense device 22 manages the idle/busy states of channels by managing carrier sense states on the basis of a combination of real carrier sense information obtained from the physical layer 10 and virtual carrier sense information obtained by a protocol at the MAC layer 20. That is to say, the carrier sense device 22 manages the idle/busy states of one or more first channels in the first communication bandwidth and one or more second channels in the second communication bandwidth instead of managing the idle/busy state of a single channel.

The channel reservation/release control device 24 generates a frame for controlling the virtual carrier sense state of the MAC layer 20, which is used to reserve a channel for a predetermined period of time or release the reserved channel. The frame generated by the channel reservation/release control device 24 is sent to the physical layer 10 and is transmitted by the first physical layer protocol processing device 11 and second physical layer protocol processing device 12.

The channel state management device 23 makes the carrier sense device 22, the channel reservation/release control device 24, and the first and second physical layer protocol processing devices 11 and 12 of the physical layer 10 operate in concert to perform desired channel access control.

Specific examples of the wireless communication apparatus shown in FIG. 1 include, for example, a 40M/20M MIMO STA (AP) and a 40M/20M STA (AP). The 40M/20M MIMO STA (AP) is a terminal (or access point) which can perform SISO transmission/reception through a 20-MHz channel, MIMO transmission/reception through a 20-MHz channel, SISO transmission/reception through a 40-MHz channel, and MIMO transmission/reception through a 40-MHz channel. The 40M/20M STA (AP) is a terminal (or access point) which can perform SISO transmission/reception through a 20-MHz channel and MIMO transmission/reception through a 40-MHz channel. It is assumed that the link layer 30 is provided with the function of a general link layer defined by IEEE 802.

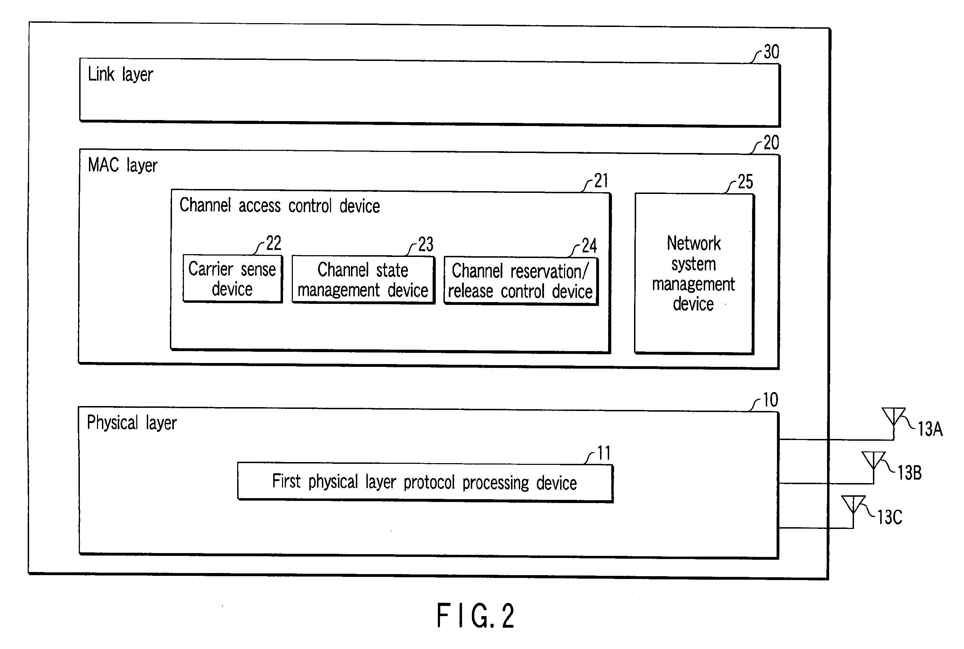

Another wireless communication apparatus shown in FIG. 2 differs from that shown in FIG. 1 in that the physical layer 10 does not include the second physical layer protocol processing device 12 shown in FIG. 1. This apparatus is the same as the wireless communication apparatus in FIG. 1 in that the first communication bandwidth of the first physical layer protocol processing device 11 has a nominal bandwidth of 20-MHz and it makes no difference whether or not the MIMO technique is included. In addition, these apparatuses are the same in terms of the MAC layer 20 and link layer 30.

Note, however, that the wireless communication apparatus in FIG. 2 performs mainly media access control based on the first physical layer protocol processing device 11, and hence partly differs from the wireless communication apparatus shown in FIG. 1 in the details of the operation of the MAC layer 20 in FIG. 2. If the first physical layer protocol processing device 11 does not include the MIMO technique, the wireless communication apparatus in FIG. 2 may be an existing apparatus conforming to at least one of IEEE 802.11a, IEEE 802.11b, and IEEE 802.1g.

Examples of the wireless communication apparatus shown in FIG. 2 include, for example, a 20M MIMO STA (AP) and a 20M STA (AP). The 20M MIMO STA (AP) is a terminal (or access point) which can perform SISO transmission/reception through a 20-MHz channel and MIMO transmission/reception through a 20-MHz channel. The 20M STA (AP) is a terminal (or access point) which can perform SISO transmission/reception through a 20-MHz channel.

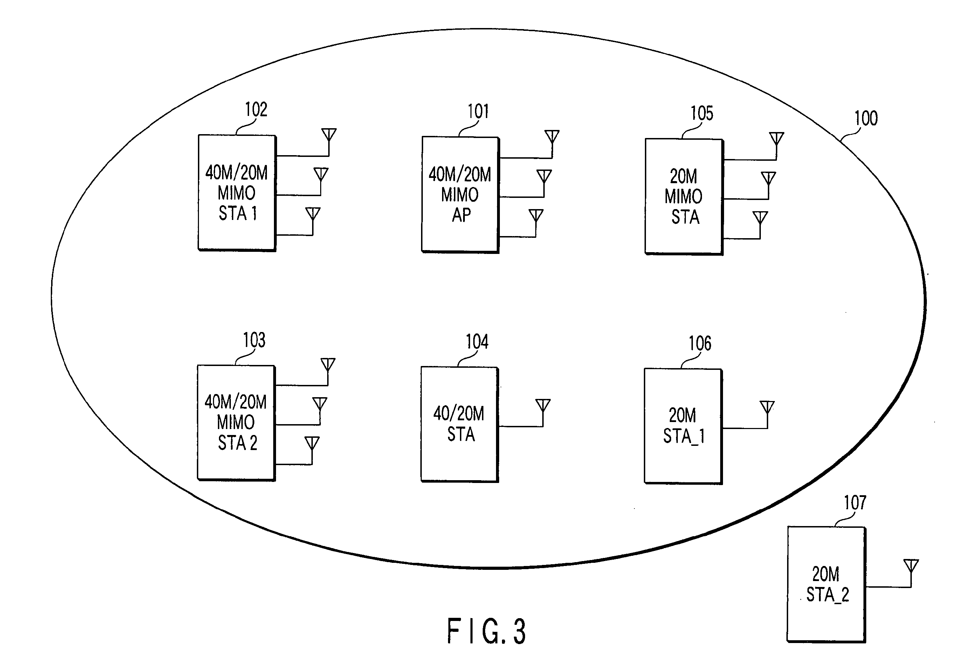

A network 100 shown in FIG. 3 includes the wireless communication apparatuses in FIGS. 1 and 2. A base station 101 in the network 100 is an access point corresponding to a 40M/20M MIMO AP. Terminals 102 to 106 have established association with the base station 101. In this case, the terminal 102 is a 40M/20M MIMO STA_1; the terminal 103, a 40M/20M MIMO STA_2; the terminal 104, a 40M/20M STA; the terminal 105, a 20M MIMO STA; and the terminal 106, a 20M STA_1. It is assumed that another terminal 107 is a 20M STA_2 and belongs to a network using, for example, 20M_ch_b.

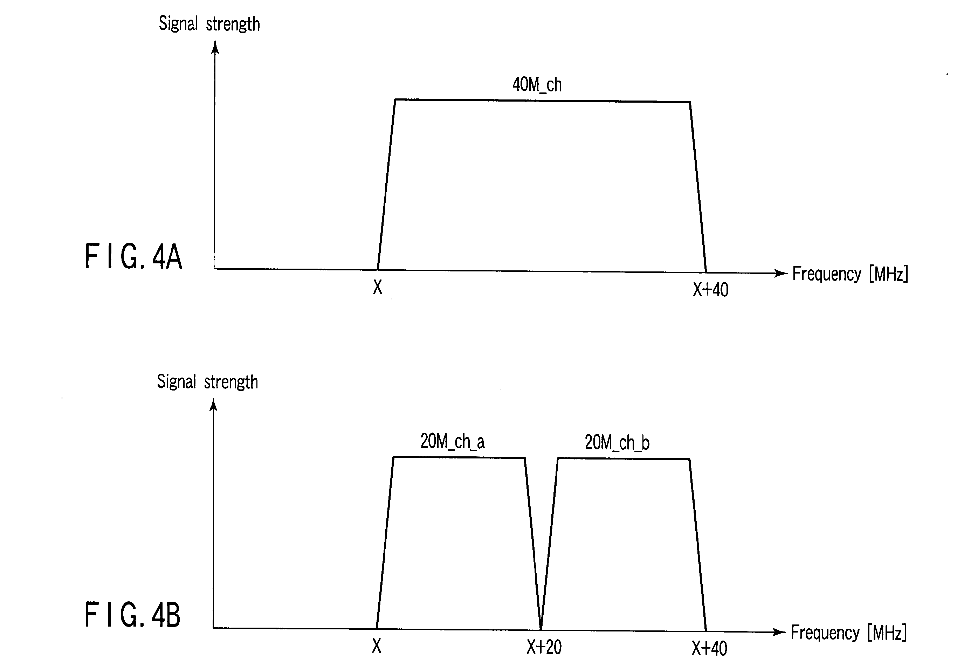

The network 100 in FIG. 3 has a 20-MHz channel 20M_ch_a using a frequency band from X MHz to (X + 20) MHz and a 40-MHz channel 40M_ch using a frequency band from X MHz to (X + 40) MHz as a communication channel shown in FIGS. 4A and 4B. Therefore, the frequency band from X MHz to (X + 20) MHz is redundantly used by the 20-MHz channel and 40-MHz channel. Another 20-MHz channel 20M_ch_b using the frequency band from (X + 20) MHz to (X + 40) MHz is not used in the network 100 in FIG. 3, but may be used in another network.

As stated above, 20M_ch_a and 20M_ch_b are not used simultaneously. In the network 100, the 40-MHz channel 40M_ch and one of the 20-MHz channels 20M_ch_a and 20M_ch_b which overlap 40M_ch in terms of frequency are used. In other words, a 40M/20M MIMO STA and a 40M/20M STA belonging to the network 100 do not simultaneously use 20M_ch_a and 20M_ch_b.

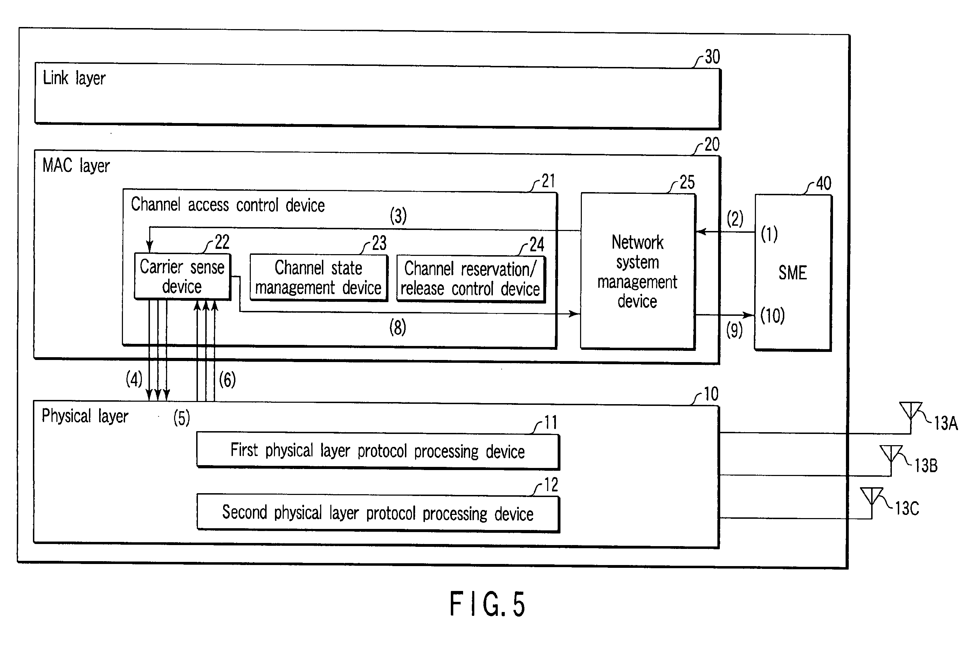

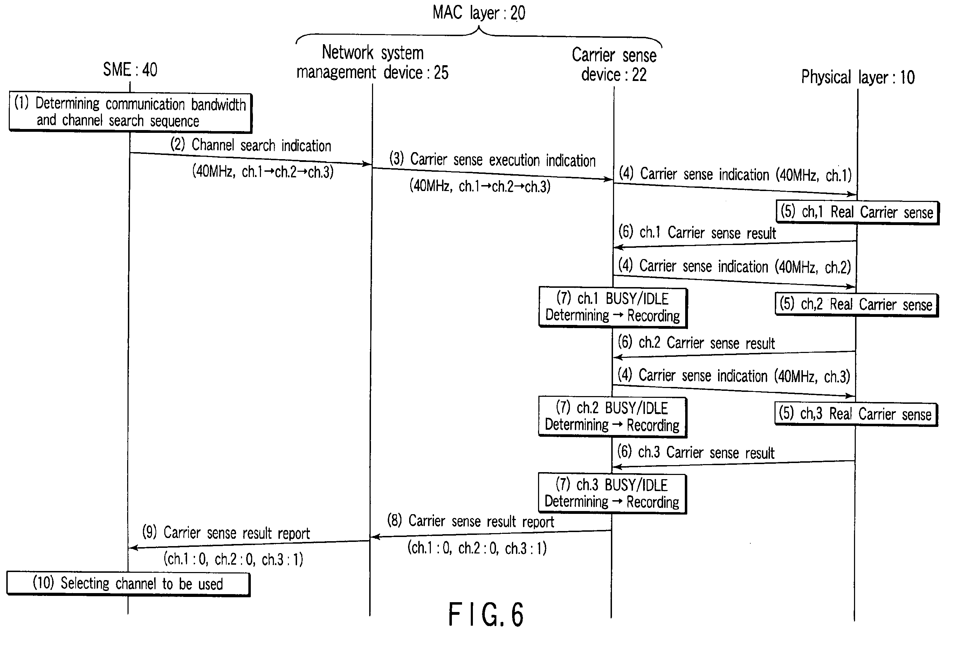

Referring now to FIGS. 5 and 6, terminal operation of the embodiment will be explained. SME 40 in FIG. 5 is a station management entity device which exchanges various information and control signals between the MAC layer 20 and the physical layer 10 in an IEEE 802.11 series wireless LAN in order to help a terminal function properly.

When AP or STA performs channel search prior to communication:
(1) Firstly, the communication bandwidth (such as a 20 MHz bandwidth or a 40 MHz bandwidth) in which the channel search should be carried out and a channel search sequence in which order the channel should be searched are determined in SME 40;
(2) Subsequently, a signal for channel search indication is transmitted from the SME 40 to the network system management device 25 in the MAC layer 20. With the channel search indication, the SME 40 notifies the network system management device 25 of the communication bandwidth in which the channel search should be carried out and the channel search sequence determined in (1). In this case, it is assumed that, for example, ch.1, ch.2 and ch.3 are searched in this order in a 40 MHz communication bandwidth;
(3) The network system management device 25, which receives the channel search indication, gives the indication to the carrier sense device 22 to perform carrier sense in accordance with the communication bandwidth (40 MHz) and the channel search sequence (ch.1 to ch.2 to ch.3) instructed by the SME 40 and demands to be informed of the idle/busy states of each channel (ch.1, ch.2 and ch.3);
(4) The carrier sense device 22 transmits a signal instructing the execution of a real carrier sense to the physical layer 10. At this time, the communication bandwidth (40 MHz) and channel number (ch.1, or ch.2, or ch.3) to be searched are informed to the physical layer 10 as a parameter. The channel number to be searched is given in the order according to the channel search sequence (ch.1 to ch.2 to ch.3) instructed in (3). In this example, the physical layer 10 is first instructed to carry out real carrier sense of ch.1. After receiving the carrier sense result of ch.1 from the physical layer 10, the carrier sense device 22 then instructs the physical layer 10 to carry out real carrier sense of ch.2. Further, on receiving the carrier sense result of ch.2 from the physical layer 10, the carrier sense device 22 instructs the physical layer 10 to carry out real carrier sense of ch.3. The following operations from (4) to (7) are carried out from ch.1, one at a time, in accordance with the instructed channel search sequence (ch.1 to ch.2 to ch.3). Upon terminating the sequence up to ch.3, the operation proceeds with (8);
(5) The physical layer 10 performs the real carrier sense of the instructed channel in the bandwidth instructed by the carrier sense device 22 of the MAC layer 20;
(6) It reports the result of the carrier sense to the carrier sense device 22 of the MAC layer 20;
(7) By combining the real carrier sense result obtained from the physical layer 10 in (6) and the virtual carrier sense information of the MAC layer 20, the carrier sense device 22 determines and stores the idle/busy state of the channel;
(8) The carrier sense device 22 reports the idle/busy state of each channel (ch.1, ch.2, ch.3) stored in (7) collectively to the network system management device 25;
(9) The network system management device 25 reports the idle/busy state of each channel received in (8) to SME 40; and
(10) Based on the idle/busy state of each channel reported in (9), SME 40 determines the channel (any one of ch.1, ch.2 and ch.3) to be used for data communication.

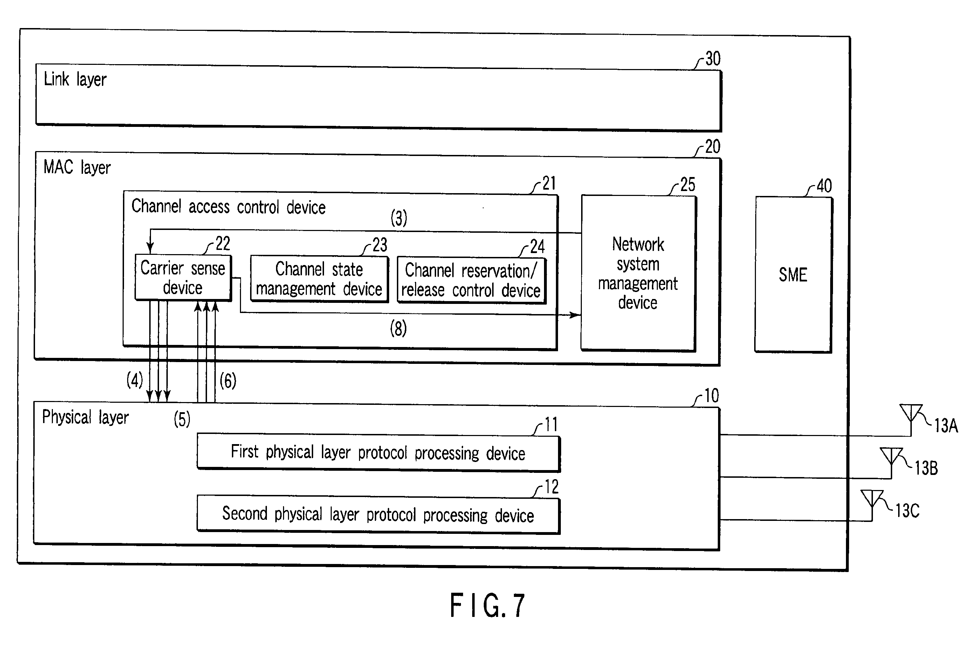

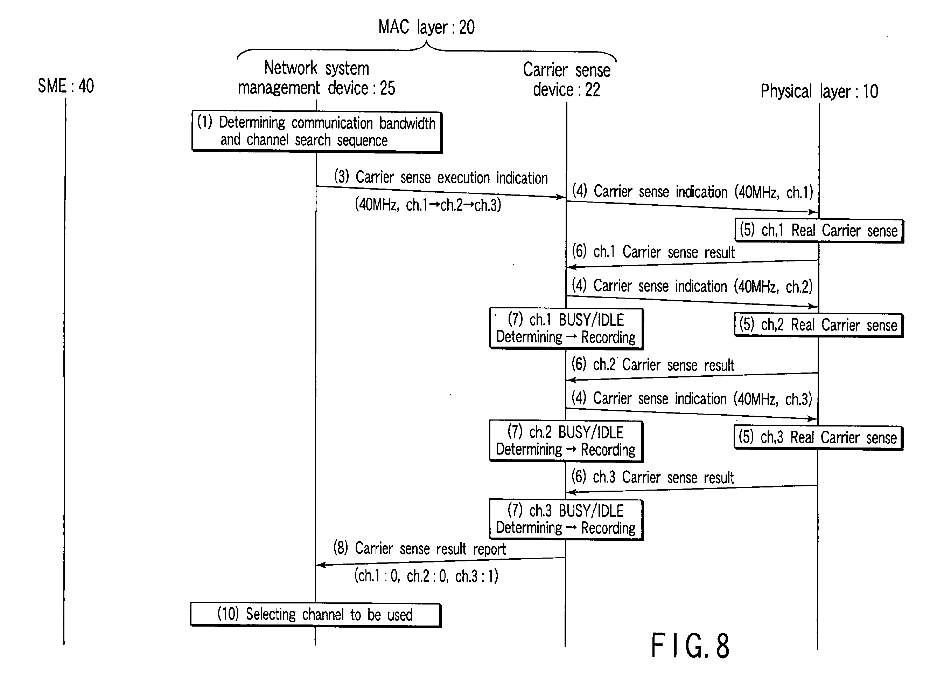

With regard to the series of terminal operation relevant to the above channel search, as shown in FIGS. 7 and 8, (1) determination of the communication bandwidth to carry out cannel search and the channel search sequence, (3) channel search indication to the carrier sense device 22, and (10) assignment of the channel to be used for data communication, can also be carried out by the network system management device 25 inside the MAC layer 20 instead of the SME 40.

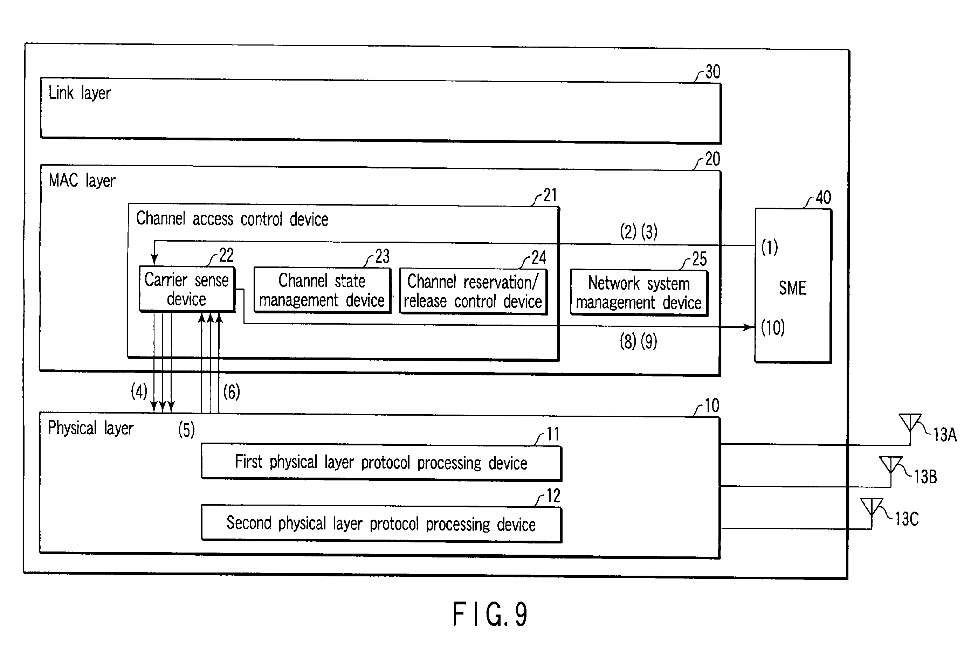

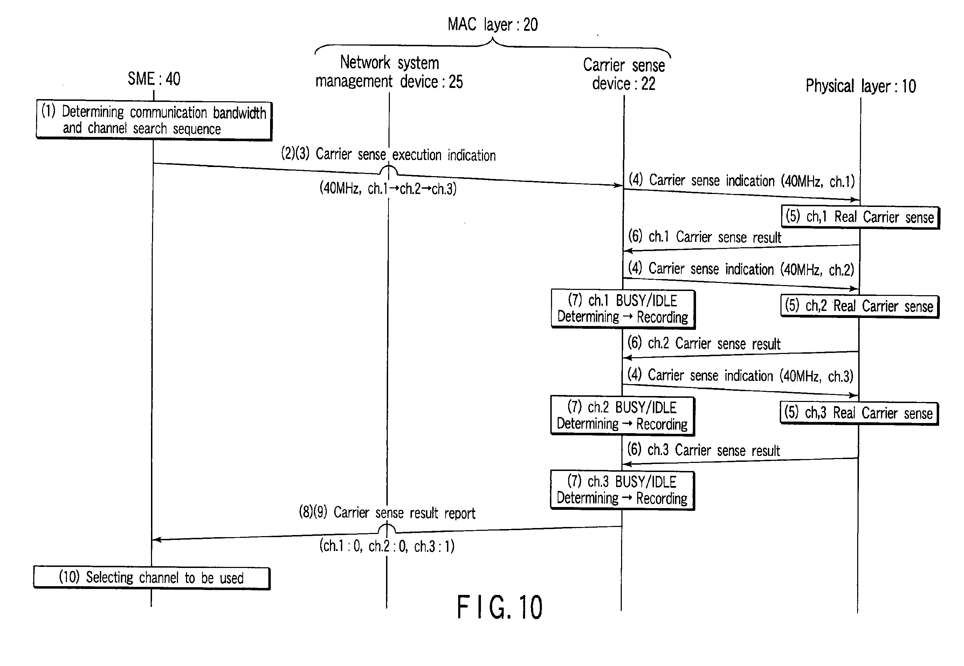

Further, as shown in FIGS. 9 and 10, it is also possible to issue channel search indications directly to the carrier sense device 22 from the SME 40 without going through the network system management device 25.

The following explains an example of a channel search sequence and a terminal operation in which case a large interference power, such as radar, is detected on the identical channel during channel search or during communication using a channel selected in accordance with the channel search result.

In the explanations below, it is supposed that the terminal supports both a communication protocol using a 20 MHz communication bandwidth and a communication protocol using a 40 MHz communication bandwidth as explained in FIGS. 1 to 4, and a case of securing a total of two channels, of a 40 MHz channel and a 20 MHz channel is considered. The communication bandwidth of the channel search is assumed to be 20 MHz. Further, the wireless communication system assumes to occupy four channels each having a communication bandwidth of 20 MHz. When performing a 40 MHz communication by bundling two channels, one of the two channels is assumed to be a control channel and the other is an extension channel. The control channel is used for control information transmission, 20 MHz communication and 40 MHz communication. The extension channel is used with the control channel for the 40 MHz communication.

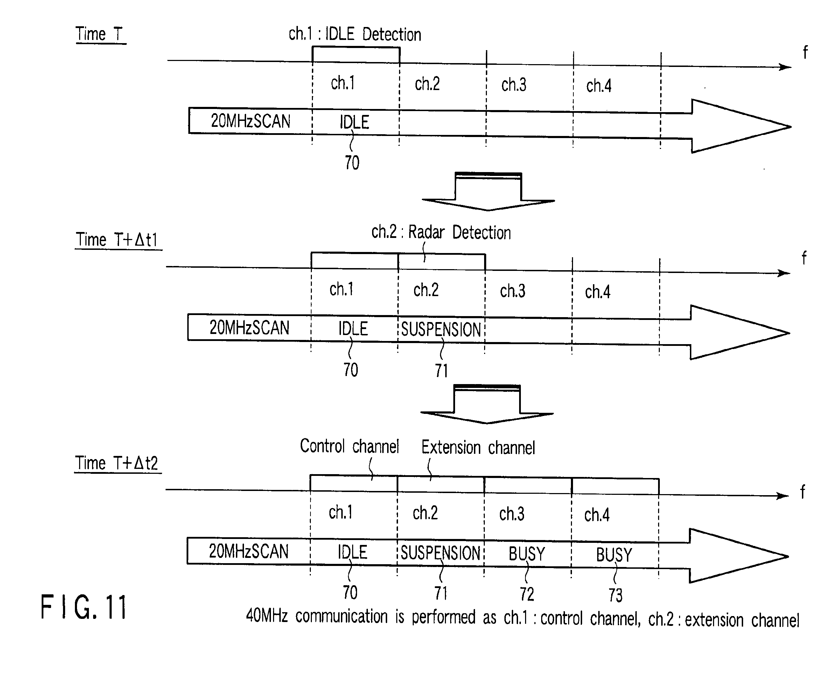

An example of a terminal operation when the terminal detects radar in the first embodiment is shown in FIG. 11.

When performing the 40 MHz communication, it is necessary that the terminal secures two channels each having the 20 MHz communication bandwidth. In order to secure two unused channels the terminal searches ch.1 to ch.4 in order by using the 20 MHz communication band. As shown in FIG. 11, firstly, in time T, ch.1 is detected as an unused channel as a result of carrier sense of ch.1, therefore, the terminal records ch.1 as IDLE 70. Next, in time T + Δt1, as a result of carrier sense of ch.2, radar is detected on ch.2, therefore, the terminal records ch.2 as SUSPENSION 71 instead of BUSY. Next, in time T + Δt2, as a result of carrier senses of ch.3 and ch.4, it is detected that, for example, these channels are used for not radar but other communications. Therefore, ch.3 and ch.4 are recorded as BUSY.

After terminating the search on all channels, based on the results of channel search, the two channels other than the channels in a BUSY state, i.e., ch.1 and ch.2, are determined to be used for the 40 MHz communication. In this time, the 40 MHz communication will be performed by using ch.1, which is in an IDLE state, as the control channel and ch.2, which is in a SUSPENSION state, as the extension channel.

As a result of channel search, if there are two or more unused channels recorded as IDLE, ch.2, which is recorded as SUSPENSION due to radar, will not be used, and the two channels from the unused channels will possibly be selected and used. In other words, the SUSPENSION channel is used for carrying out communication only when there is no unused channel or if there is only one unused channel. When both two channels, which are unused channels in an IDLE state, are secured, either channel can be the control channel or the extension channel.

Further, since the radar is generally a narrow beam revolving in a constant period, signal power transmitted by the radar is detected at the terminal at fixed time intervals (i.e., radar can be detected). Accordingly, when the radar is detected as in ch.2, the terminal can measure the cycle in which the signal power of the radar is detected and record the cycle and the duration of interference in a memory device and the like. By determining the cycle in which radar interference appears on the channel and performing radar avoidance operation in accordance with such cycle, the channel in a SUSPENSION state can be used as an extension channel for 40 MHz communication, coexisting with radar. The following explains an example of a radar avoidance operation based on the radar cycle.

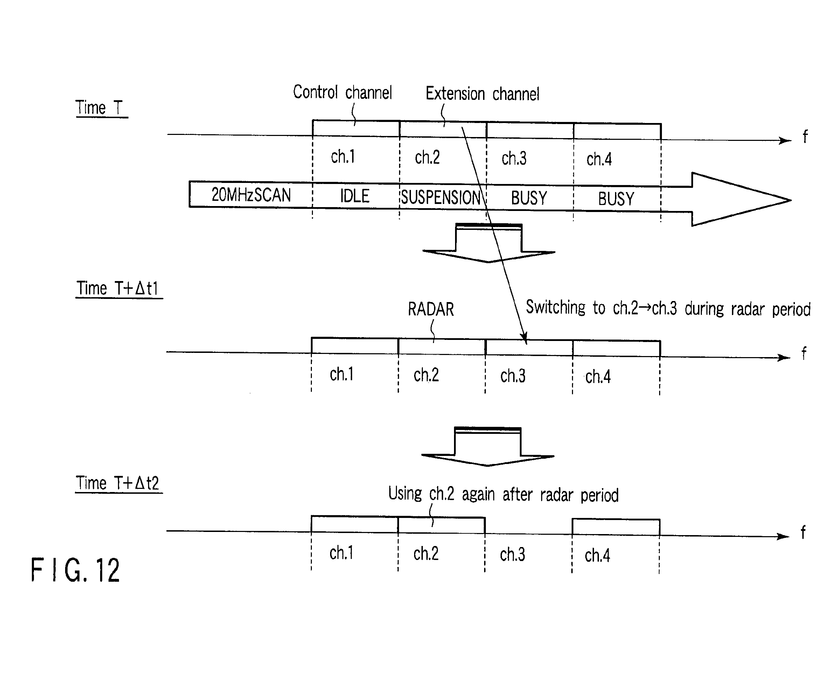

Referring to FIG. 12, during the radar period, the channel in the SUSPENSION state is switched to another channel in accordance with the radar cycle.

During the period in which the radar is not detected with the terminal due to the radar beam being directed to a different direction from the terminal in the present embodiment (time T in FIG. 12), ch.1 and ch.2 are used to perform the 40 MHz communication. Subsequently, when the period in which the radar interference is detected in time T + Δt1 comes by, the channel search is performed anew, and ch.2 is switched to ch.3 (a substitute channel) if, for example, ch.3 is detected as being IDLE.

Such channel search for searching for a substitute channel for ch.2 does not have to be carried out each time at every radar cycle. For example, the channel search can be carried out in every several radar cycles, or even be carried out irrespective of the radar cycle. As an example for carrying out channel search irrespective of the radar cycle, it may perform channel search at each communication in order to get hold of the IDLE channel to use as a substitute channel during the period in which the radar interference is detected, prior to the communication.

After ch.2 is switched to ch.3, the 40 MHz communication continues by using ch.1 and ch.3. Further, when ch.2 becomes IDLE again at time T + Δt2, ch.3 is switched to ch.2, and the 40 MHz communication is performed by using ch.1 and ch.2.

In the example of FIG. 12, a case in which ch.1 as the control channel is situated apart from ch.3 as the extension channel to be used during the radar period with ch.2 being sandwiched between them is shown. However, in consideration of the arrangement of the terminal, it is desirable that the control channel and extension channel neighboring each other are used to perform the 40 MHz communication. Accordingly, when selecting the extension channel to be switched during the radar period, a channel adjacent to the control channel is first searched for to determine whether it is in an IDLE state or not. If it is IDLE, the channel is used as an extension channel. If the channel adjacent to the control channel is BUSY, a distant channel is used during the radar period as shown in the example of FIG. 12.

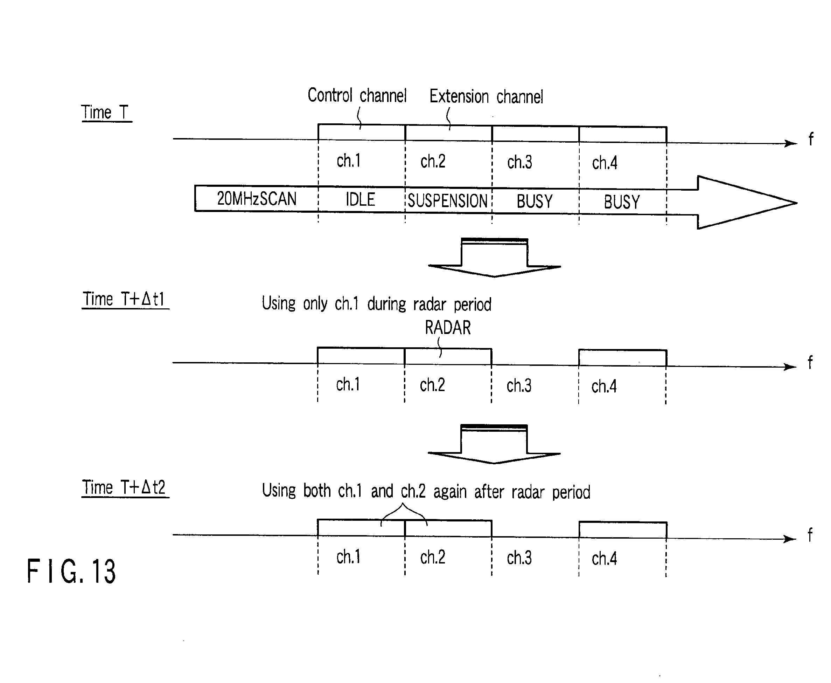

FIG. 13 shows another terminal operation when the terminal detects the radar. In the operation of FIG. 13, a channel in a SUSPENSION state during the radar period is suspended from use in accordance with the radar cycle. During the period in which a radar beam is not detected with the terminal due to the radar beam being directed to another direction (time T in FIG. 13), ch.1 and ch.2 are used to perform the 40 MHz communication. Subsequently, when radar interference is detected at time T + Δt1, all transmissions in ch.2 are suspended, and the 20 MHz communication is performed by using only ch.1. Further, when ch.2 becomes IDLE at time T + Δt2, transmission forbidden state for ch.2 is cancelled, and the 40 MHz communication is performed by using ch.1 and ch.2 again. In addition, the operation shown in FIG. 13 can also be applied when the channel search result in the operation shown in FIG. 12 is all BUSY and a substitute extension channel cannot be found for the radar period.

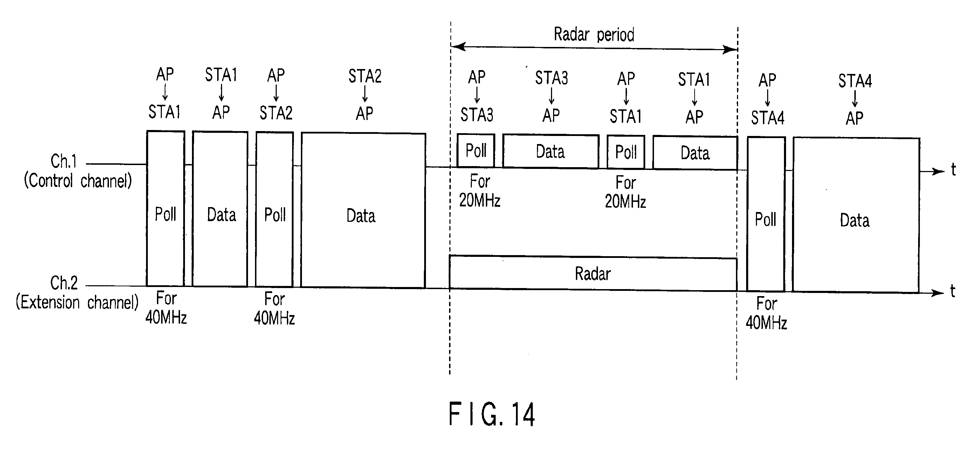

As a method to realize the suspension of transmission in ch.2 during the radar period as in the operation of FIG. 13, for a channel in a SUSPENSION state, a method using an access scheme of central control such as PCF (Point Coordination Function) or HCCA (HCF Controlled Channel Access) can be considered. For example, a central control station such as 40MAP determines the cycle in which the signal power of the radar is detected on ch.2 and records the cycle and duration. During the period in which the radar beam is directed to another direction and is not detected with the terminal, AP permits data frame transmission by transmitting Poll frames to each STA within its own BSS in order. Meanwhile, during the period in which the radar is detected, the AP does not transmit any Poll frames to any of the STA. Since each STA does not receive Poll frames from the AP, it does not transmit data frames. Further, as illustrated in FIG. 14, a scheme in which the AP transmits either the Poll frame for 40 MHz communication or the Poll frame for the 20 MHz communication to each STA according to the radar cycle can also be considered. During the period in which the radar is not detected, the AP transmits a Poll frame, which permits the 40 MHz communication, to STA, and the STA receiving such Poll frame transmits a 40 MHz data frame. Meanwhile, during the period in which the radar is detected, the AP transmits a Poll frame, which permits the 20 MHz communication, to STA, and the STA receiving such Poll frame transmits a 20 MHz data frame by using only ch.1, which is the control channel. In this manner, the AP controls the permission for transmission to each STA within its own BSS on ch.2 according to the radar cycle in order to prohibit transmission on ch.2 during the radar period. Alternatively, since each STA transmits the data frame in accordance with the Poll frame received from the AP, all STAs do not need to record the radar cycle, but shall at least be recorded by the AP.

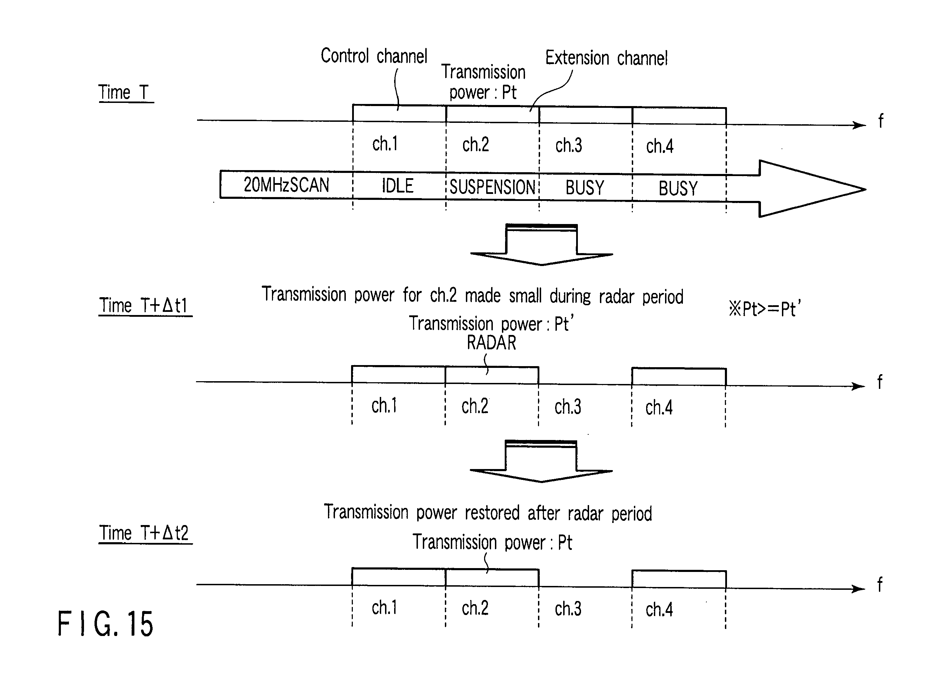

FIG. 15 shows another operation when the terminal detects the radar. The operation in FIG. 15 sets a transmission power for a channel in a suspension state small during a radar period in accordance with a radar cycle. During a period in which radar beam is directed to other directions and is not detected at the terminal (at time T in FIG. 15), the terminal transmits data by transmission power Pt in either case of using the channels of ch.1 and ch.2. Subsequently, when the period in which radar interference is detected at T + Δt1 arrives, the terminal transmitting data by using ch.2 uses transmission power Pt'. Here, Pt>=Pt'. When ch.2 becomes IDLE again at time T + Δt2, the terminal transmitting data by using ch.2 returns the transmission power to Pt again. In the example of FIG. 15, 40 MHz communication can be performed at all times without having to switch channels even during the radar period. In addition, during the period of time T + Δt1 in which radar interference is detected, transmission power can be reduced from Pt to Pt' not only for ch.2 but also for ch.1. By controlling the transmission power by synchronization between ch.1 and ch.2, there is an advantage that the transmission power of all sub-carriers can be controlled collectively in a 40 MHz communication, which uses, for example, an OFDM modulation.

According to the first embodiment explained above, even in the case of detecting a large cyclic interference (source), like radar, on any one of the plurality of channels when performing broadband communication by bundling a plurality of channels, communication can proceed without coming under the influence of such interference. Particularly, by setting the control channel to a channel where radar does not exist, without switching control channels or suspending communication on the control channel, communication using a communication band for one channel at minimum (only the control channel) can be performed at all times.

In addition, by setting a channel in which radar exists as an extension channel, frequency band of the extension channel can be switched smoothly while exchanging control information on the control channel at the time of radar detection. Alternatively, it is possible to switch to 20 MHz communication by suspending only the transmission on the extension channel without interrupting communication.

### (Second embodiment)

The first embodiment explains the example of operation in the case of detecting radar at the time of channel search, which is carried out before the terminal determines the channel to be used, whereas, the second embodiment explains the terminal operation in the case of being unable to detect radar at the time of channel search but eventually detecting radar after determining the channel to be used. As the radar appears periodically on the channel, the radar cannot be detected during the period in which the radar beam is directed to other directions. For this reason, there is a possibility of not being able to detect the radar at the time of channel search.

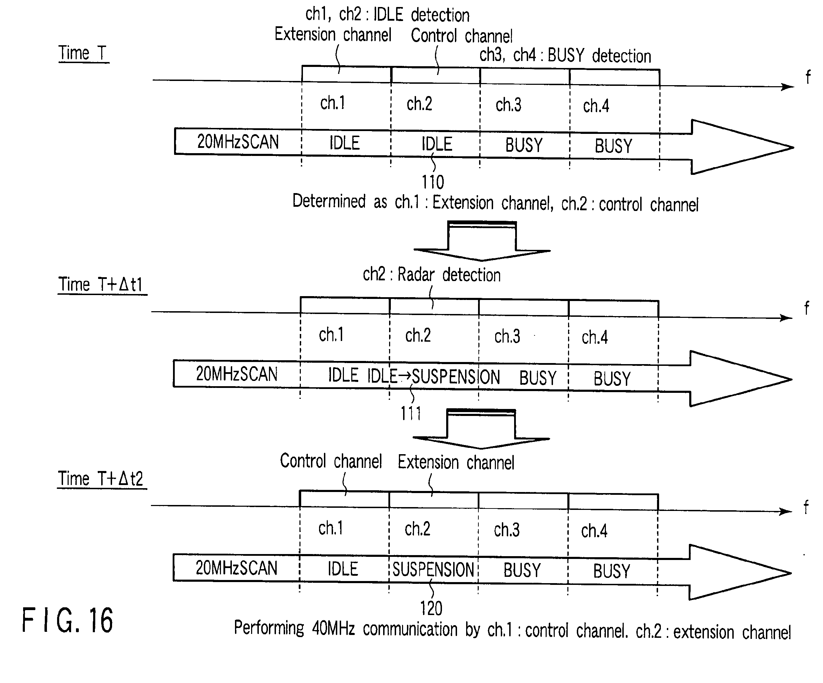

FIG. 16 illustrates an example of terminal operation at the time of radar detection for the second embodiment. When the radar is not detected during the channel search carried out before determining the channel to be used at time T, ch.2 is recorded as IDLE 110, and is used as a channel for 40 MHz communication. However, as the radar revolves, the terminal detects the radar at, for example, time T + Δt1. In such case, the terminal rewrites the state of ch.2 from Idle 110 to SUSPENSION 111. If ch.2 is used as a control channel, ch.2 is changed to an extension channel, and ch.1, which has been used as an extension channel, becomes the control channel.

If ch.2 is used as an extension channel from the beginning, only the state of ch.2 is rewritten to SUSPENSION, and the role of ch.1 and ch.2 remain unchanged.

According to such second embodiment, as the control channel can be set to a channel in which radar does not exist as in the case with the first embodiment, communication using a communication band for at least one channel (only the control channel) can be carried out at all times without having to switch the control channel or suspending communication on the control channel.

In addition, by setting the channel in which radar exists as the extension channel, while exchanging control information on the control channel at the time of radar detection, the frequency band of the extension channel can be switched smoothly. Alternatively, it can be switched to a 20 MHz communication without interrupting the communication. The switching of these extension channels and the operation example of transmission suspension are similar to the first embodiment.

### (Third embodiment)

The third embodiment does not perform the measurement or recording of a radar cycle explained by the first embodiment. The third embodiment performs any one of the operation patterns described below at which time the radar is detected. Three operation patterns are described below.

In a first operation pattern, when radar is detected on a channel secured for 40 MHz communication, such channel is released. After releasing the relevant channel, 20 MHz communication is performed by continuing using only either one of the channels not undergone interference from the radar.

In the second operation pattern, when radar is detected on the channel, such channel is released, and another channel is secured anew. In other words, the channel to be used is switched to an unused channel from the channel in which the radar was detected, and the 40 MHz communication is continued. Thereafter switching the channel, there is no returning to the channel where the radar was detected, and the new channel to which the channel has been switched remains in use.

In such case, it is preferable that the channel to be newly switched to is a channel adjacent to the other channel in use.

However, when the adjacent channel is already BUSY, it is unable to secure two channels adjacently for 40 MHz communication; therefore, two distant channels will be used to perform 40 MHz communication. In such case, it is also possible to perform channel search anew in order to move to two channels secured adjacently. As a result of this channel search, when two adjacent unused channels are detected, both two channels are moved to these adjacent channels, and the 40 MHz communication continues. Further, when two adjacent unused channels cannot be detected, the channel in which radar is detected is released as described above, and a 20 MHz communication is to be performed with only one channel.

The third operation pattern is to continue using the channel in which radar is detected without releasing it, for 40 MHz communication.

However, in such case, the channel in which radar is detected remains in use by the use of a scheme in which interference caused to the radar is kept low, such as, by making the transmission power small or transmitting an electric wave to a direction different from the approaching direction of the radar.

Further, it is preferable to measure an interference occurrence rate (radar cycle) for all channels, in order to switch to channels with the least interference occurrence rate (i.e., a long radar cycle).

According to the first to third embodiments described above, even in the case where a radar is using the same communication band, a high-speed communication can be performed by using a wide frequency band, which is a bundle of a plurality of channels, without causing interference with the radar.

## Claims

1. A wireless communication apparatus using any of a plurality of communication bands, **characterized by** comprising:
a detection device (22, 10) configured to detect a cyclic interference with a first communication band of the plurality of communication bands;
an assignment device (40) configured to assign the first communication band to an extension channel and assign a second communication band of the plurality of communication bands to a control channel, when the cyclic interference has been detected by the detection device (22, 10); and
a communication device (10) configured to perform wireless communication using the control channel and the extension channel.

2. The apparatus according to claim 1, **characterized by** further comprising a first switching device (40) configured to switch the control channel and the extension channel alternately when interference has been detected not on the first communication band but on the second communication band.

3. The apparatus according to claim 1, **characterized in that** the control channel is used for control information communication and data communication, and wherein the extension channel is used for communication with the control channel.

4. The apparatus according to claim 1, **characterized by** further comprising:
a measuring device configured to measure a cycle of the interference;
a storing device to record the cycle; and
a second switching device (40) configured to switch the extension channel from the first communication band to a third communication band of the plurality of communication bands by assigning the third communication band to the extension channel in accordance with the cycle.

5. The apparatus according to claim 1, **characterized by** further comprising:
a measuring device configured to measure a cycle of the interference; and
a storing device to record the cycle, and
wherein the communication device (10) is configured to perform wireless communication using only the control channel during the period that the interference is detected in accordance with the cycle.

6. The apparatus according to claim 1, **characterized by** further comprising:
a measuring device configured to measure a cycle of the interference; and
a storing device to record the cycle; and
a restricting device configured to restrict a transmission power for the first communication band to a predetermined level or lower during the period that the interference is detected in accordance with the cycle.

7. A wireless communication apparatus using a first communication band and a second communication band, **characterized by** comprising:
a detecting device configured to detect a cyclic interference with the first communication band; and
a communication device (10) configured to perform wireless communication by prohibiting use of the first communication band and using only the second communication band during a period in which the cyclic interference is detected.

8. A wireless communication apparatus using any of a plurality of communication bands including a first communication band, second communication band, and a third communication band, **characterized by** comprising:
a detecting device configured to detect a cyclic interference with the first communication band, the first communication band being used for wireless communication;
a third switching device (40) configured to switch the first communication band to the second communication band when the interference has been detected; and
a communication device (10) configured to perform wireless communication using the second communication band and the third communication band when the first communication band has been switched to the second communication band.

9. A wireless communication apparatus using first, second, third, and fourth communication bands, the first and second bands being adjacent to each other, and the third and fourth bands being adjacent to each other, **characterized by** comprising:
a detecting device configured to detect a cyclic interference with one of the first and second communication bands;
a fourth switching device (40) configured to switch the first and second communication bands to the third and fourth communication bands when the interference has been detected; and
a communication device (10) configured to perform wireless communication using the third and fourth communication bands switched by the fourth switching device (40).

10. A wireless communication apparatus using first and second communication bands used in a bundle, **characterized by** comprising:
a detecting device configured to detect a cyclic interference with the first communication band;
a restricting device configured to restrict a transmission power for the first communication band to a predetermined level or lower when the interference has been detected; and
a communication device (10) configured to perform wireless communication using the first communication band for which the transmission power is restricted and the second communication band during a period of the cyclic interference.

11. A wireless communication apparatus, **characterized by** comprising:
a detecting device configured to detect cyclic interference with a plurality of communication bands;
a determining device configured to count a frequency of interference detections of each of the plurality of communication bands to obtain a plurality of interference detection frequencies; and
a communication device (10) configured to perform wireless communication using one of the communication bands which indicates a lowest frequency of the interference detection frequencies.

12. A wireless communication system, comprising:
a first wireless communication apparatus and a second wireless communication apparatus between which wireless communication is performed using a plurality of communication bands in response to permission for communication provided from the first wireless communication apparatus to the second wireless communication apparatus,
the first wireless communication apparatus **characterized by** comprising:
a detecting device configured to detect a cyclic interference with any of the plurality of communication bands to obtain a detection cycle of the cyclic interference;
a storing device to record the interference detection cycle; and
a control device configured to restrict permission for transmission to the second wireless communication apparatus in accordance with the interference detection cycle.

13. A wireless communication method using any of a plurality of communication bands, **characterized by** comprising:
detecting a cyclic interference with a first communication band of the plurality of communication bands;
assigning the first communication band to an extension channel and assigning a second communication band of the plurality of communication bands to a control channel, when the cyclic interference has been detected; and
performing wireless communication using the control channel and the extension channel.
